# EUROPEAN PATENT SPECIFICATION

(11) **EP 0 733 696 B1**
(45) Date of publication and mention of the grant of the patent: **30.10.2002**
(21) Application number: 96301588.8
(22) Date of filing: 07.03.1996
(51) Int. Cl.: C10M 133/52, C10M 159/12, C10M 149/06, C10M 149/10, C10M 145/16, C08F 255/10, C08F 8/32, C08F 8/42

(54) **Lubricating oil dispersants**
Schmieröldispergiermittel
Dispersants pour huile lubrifiante

(30) Priority: 24.03.1995 GB 9506102; 13.07.1995 GB 9514294
(43) Date of publication of application: 25.09.1996
(73) Proprietor: ETHYL PETROLEUM ADDITIVES LIMITED, Bracknell, Berkshire RG12 2UW (GB)
(72) Inventor: Scattergood, Roger, Reading, Berkshire, RG7 1DP (GB)
(74) Representative: Cresswell, Thomas Anthony

(56) References cited:
- EP-A- 0 629 641
- EP-A- 0 677 572
- WO-A-90/03359
- WO-A-95/00607

## Description

This invention relates to dispersants useful as additives in lubricating oils, especially lubricating oils for internal combustion engines and vehicles driven by such engines. More particularly, the present invention provides novel ashless dispersants which have reduced reactivity towards fluoroelastomers and which impart desirable viscometric properties to lubricating oils in which are they incorporated.

A continuing problem in the art of lubrication is to provide lubricant compositions which meet the requirements of original equipment manufacturers. One such requirement is that the lubricant does not cause or contribute to premature deterioration of seals, clutch face plates or other parts made from fluoroelastomers. Many currently used dispersants contain basic nitrogen, and it is known that such dispersants, including more particularly the commonly used succinimide dispersants, tend to have an adverse effect upon fluoroelastomers which causes them to lose flexibility and tensile strength, to become brittle, and, in severe cases, to disintegrate.

Standard test methods for evaluating fluoroelastomer compatibility of lubricant compositions include the Volkswagen PV-3334 Seal Test, the CCMC Viton Seal Test (CEC L-39-T-87 oil/elastomer compatibility test) and the Volkswagen PV-3344 Seal Test. The last of these is a severe fluoroelastomer test procedure and a variety of commercially available premium motor oils from various manufacturers fail to meet the requirements of the test.

There is therefore a continuing need for novel dispersants which satisfy current requirements for compatibility with fluoroelastomers while at the same time meeting the other requirements for ashless dispersants to be used in lubricant oils.

EP-A-629641 describes a method for the production of an oil-soluble dispersant by reacting a polyamine and a terpolymeric acylating agent derived from a polyolefin, an α-olefin and an unsaturated dicarboxylic acid. A single charge of acylating agent is used. EP-A-629641 also contemplates addition of further polyamine in a subsequent step.

The present invention provides a process for the preparation of a novel class of oil-soluble ashless dispersants which have improved compatibility with fluoroelastomers, and which moreover have desirable viscometric properties such that their use reduces, or even eliminates, the normal requirement for viscosity index improvers to be incorporated in the lubricant. Viscosity index improvers are routinely incorporated in lubricating oils to provide effective lubrication over a range of temperatures by increasing the viscosity of the oil at high temperature without unduly increasing its viscosity at low temperature. Surprisingly, it has been found that it is possible to control the viscometric properties, more particularly the viscosity lift, of lubricating oils in which the dispersants of the invention are incorporated by varying the way in which the dispersant is prepared.

Accordingly, the present invention provides a process for preparing an oil-soluble dispersant which comprises reacting a polyamine with an initial charge of a terpolymeric acylating agent derived from (1) a polyolefin containing on average at least 30, preferably at least 50, carbon atoms per molecule in which at least 30% of the residual olefin groups are in the form of vinylidene radicals of formula:

-CR=CH₂

where R is alkyl of 1 to 6 carbon atoms; (2) an α-olefin; and (3) an unsaturated dicarboxylic acid or derivative thereof, at least one further charge of the terpolymeric acylating agent being added subsequently. Dispersants prepared by the process described herein also form part of the present invention.

It has been found that varying the mole ratio of terpolymeric acylating agent reacted initially with the polyamine to acylating agent reacted subsequently with polyamine can be used to adjust the viscometrics of lubricating oils in which the dispersants are incorporated. This has the advantage of allowing the viscometrics of lubricating oils to be manipulated to meet specific requirements, and enables all or at least most viscosity index improver to be left out of the finished lubricant. The present invention thus also includes within its scope the use of the dispersants described herein as additives for controlling the viscometric properties of a lubricant composition comprising a major proportion of oil of lubricating viscosity. The term "viscometric properties" is intended to mean low and high temperature viscosities and viscosity index.

Typically, in preparing the oil-soluble ashless dispersants of the invention the mole ratio of total polyamine to total terpolymeric acylating agent is from 2:1 to 1:3, preferably from 1:1 to 1:2.5. More favourable results are observed using a mole ratio of total polyamine to total terpolymeric acylating agent of approximately 1:1.8.

As mentioned above, varying the mole ratio of terpolymeric acylating agent reacted initially with polyamine to terpolymeric acylating agent reacted subsequently with polyamine can be used to influence the viscometric properties of lubricating oils in which the dispersant is incorporated. Typically, this mole ratio is from 20:1 to 1:3, preferably 20:1 to 1:2, more preferably still from 4:1 to 1.5:1. It has been found that a more marked effect is observed using lower initial charges of terpolymeric acylating agent.

The polyamine is added to and reacted with the initial charge of terpolymeric acylating agent at a temperature typically in the range of 80 to 150°C. This reaction is normally allowed to run to completion before the remainder of terpolymeric acylating agent is added. A convenient way of confirming that the reaction is complete is to measure the acid value of the reaction mixture. This can be done by known methods. As the reaction proceeds acid value decreases. The reaction is regarded as complete when the acid value falls below a critical value, for example below approximately 0.06mequiv/g. After the remainder of terpolymeric acylating agent has been added the reaction temperature is raised to a higher temperature, e.g. 150 to 170°C to complete the reaction. The remainder may be added as a single charge, or as a number of charges. Alternatively, the reaction temperature can first be raised and the remainder of terpolymeric acylating agent subsequently added. It is also possible to add the remainder of acylating agent at the same time as the temperature is raised.

While the reaction between the polyamine and the acylating agent can be carried out in the absence of any solvent, it is usually preferable to dilute the terpolymeric acylating agent with a suitable solvent, e.g. a mineral oil, preferably 100 solvent neutral mineral oil, before the polyamine is added.

The polyolefins used in making the terpolymeric succinic acylating agents are preferably polyisobutenes or polypropylenes. Especially preferred are polyisobutenes, particularly polyisobutenes having a number average molecular weight in the range from about 800 to about 5,000, preferably about 900 to 2500. Such high molecular weight polyolefins are generally mixtures of individual molecules of different molecular weights and different structures. It is a requirement for the polyolefins to be used in the present invention that they must contain at least 30%, preferably at least 50%, of the residual olefinic groups in the form of vinylidene radicals of formula -CR=CH₂. More preferably, the preferred polyisobutenes contain at least 60%, and especially at least 70%, of their olefin groups in the form of radicals of formula -C(R)=CH₂, where R is hereinbefore defined and is preferably methyl. Such polyolefins are commercially available.

The α-olefins used in making the terpolymers used in the present invention normally contain from 2 to 40 carbon atoms. It is preferred to use α-olefins of formula:

R'CH=CH₂

in which R' is an aliphatic group of 1 to 26 carbon atoms. More preferably the radical R' is an alkyl radical of 10 to 26 carbon atoms. Long chain α-olefins of this type are commercially available from Chevron, Shell, Albemarle and other companies.

The third component of the terpolymers used in the present invention is an unsaturated dicarboxylic acid or derivative thereof. This component introduces acidic groups into the terpolymer. Preferably, component (3) is an unsaturated dicarboxylic acid or derivative thereof capable of reacting with a polyamine. The acid derivative is typically an ester, amide, acyl halide, metal or ammonium salt, or anhydride. such unsaturated dicarboxylic acids and their derivatives may be represented by the formula:

X-CO-CH=CH-CO-X'

in which X and X' are each -OH, -O-hydrocarbyl, -O-M (where M is a metal or ammonium), -NH₂, -Cl, or Br, or X and X' together are -O-. Specific unsaturated acidic compounds which can be used include maleic anhydrides substituted by methyl, phenyl, chlorine, bromine and other substitutents and isomers of such compounds including fumaric acid and its derivatives, and the esters and nitriles of such acids. Especially preferred are maleic or fumaric acid and their derivatives especially maleic anhydride.

The molecular weights of the terpolymers used in the invention may be determined by Gel Permeation Chromatography (GPC) using the following procedure.

### (a) Apparatus used

- Instrument :: Hewlett Packard 1050
- Detector :: Differential Refractive Index
- Column Oven :: Anachem
- Data System :: Polymer Lab GPC Software
- Columns :: 3 x 5µm PL Gel columns of 300 mm length with pore sizes of 100x10⁻¹⁰ m, 500x10⁻¹⁰ m and 1000x10⁻¹⁰ m (100, 500, and 1000Å).

### (b) Calibration

Narrow range PIB standards were prepared by preparative GPC and their molecular weights were determined by vapour phase osmometry (VPO). These samples were used to construct a calibration curve. Hexadecane and a set of narrow range polystyrene standards were then run and their molecular weights defined in terms of PIB equivalent using the Primary calibration curve. These standards Mn 284-7500 (PIB equivalent) were then used to construct a calibration curve for the particular apparatus used as follows.

A saturated solution of flowers of sulphur in tetrahydrofuran (THF; stabilized with BHT) is prepared and diluted to 50%. The narrow range polystyrene standards are prepared by dissolving each standard at an approximate concentration of 0.5% w/v in the THF solution containing sulphur. The concentration is adjusted to give approximately equal peak heights of the standard and sulphur peaks. Each standard is chromatographed and used to construct a calibration curve.

### (c) Secondary Standard

A secondary PIB standard is used whenever a sample is run. This standard is a standard PIB which has been run several times against the calibration standards and whose Mn has been determined as 1078.

### (d) Molecular Weight Measurement

The secondary standard is dissolved in the THF solution at a concentration of about 0.5% w/v and chromatographed. The sample is similarly dissolved in the THF solution and chromatographed. The molecular weight (Mn) is calculated, after corrections for the flow rate have been carried out, by reference to the value of Mn for the secondary standard.

The acid value of the terpolymer may be determined using the following method.

The terpolymer sample was dissolved in a 1:1 toluene:n-butanol mixture and titrated with a sodium isopropoxide titrant to its potentiometric endpoint. The Total Acid Number is then calculated and divided by 56.1 to give the acid value in mequiv/g.

The terpolymer of the present invention may be prepared by reacting high molecular weight poly-olefin the α-olefin, and the unsaturated acidic reactant in the presence of a free radical initiator.

The reaction may be conducted neat, that is, both the polyolefin, α-olefin and acidic reactant and the free radical initiator are combined in the proper ratio, and then stirred at the reaction temperature.

Alternatively, the reaction may be conducted in a diluent. For example, the reactants may be combined in a solvent. Suitable solvents include those in which the reactants and free radical initiator are soluble and include acetone, tetrahydrofuran, chloroform, methylene chloride, dichloroethane, toluene, dioxane, chlorobenzene, xylenes, or the like. After the reaction is complete, volatile components may be stripped off. When a diluent is employed, it is preferably inert to the reactants and products formed and is generally used in an amount sufficient to ensure efficient stirring.

In general, the copolymerization can be initiated by any free radical initiator. Such initiators are well known in the art. However, the choice of free radical initiator may be influenced by the reaction temperature employed.

The preferred free-radical initiators are the peroxide-type polymerization initiators and the azo-type polymerization initiators. Radiation can also be used to initiate the reaction, if desired.

The peroxide-type free-radical initiator can be organic or inorganic, the organic having the general formula: R₃OOR'₃ where R₃ is any organic radical and R'₃ is selected from the group consisting of hydrogen and any organic radical. Both R₃ and R'₃ can be organic radicals, preferably hydrocarbon, aroyl, and acyl radicals, carrying, if desired, substituents such as halogens. Preferred peroxides include di-tert-butyl peroxide, tert-butyl peroxybenzoate, and dicumyl peroxide.

Examples of other suitable peroxides, which in no way are limiting, include benzoyl peroxides, lauroyl peroxide, tertiary butyl peroxides, 2,4-dichlorobenzoylperoxide, tertiary butylhydroperoxide, cumene hydroperoxide, diacetyl peroxide, acetyl hydroperoxide, diethylperoxycarbonate and tertiary butylperbenzoate.

The azo-type compounds, typified by alpha,alpha'-azobisisobutyronitrile are also well known free-radical promoting materials. These azo compounds can be defined as those having present in the molecule a group -N=N- wherein the balances are satisfied by organic radicals, at least one of which is preferably attached to a tertiary carbon. Other suitable azo compounds include, but are not limited to, p-bromobenzenediazonium fluoroborate, p-tolyldiazoaminobenzene, p-bromobenzenediazonium hydroxide, azomethane and phenyl-diazonium halides, azomethane and phenyl diazonium halides. A suitable list of azo-type compounds can be found in US Patent No. 2,551,813.

The amount of initiator to employ, exclusive of radiation, depends to a large extent on the particular initiator chosen, the polyolefin used and the reaction conditions. The initiator must, of course, be soluble in the reaction medium. The usual concentrations of initiator are between 0.001:1 and 0.2:1 moles of initiator per mole of acidic reactant, with preferred amounts between 0.005:1 and 0.10:1.

The polymerization temperature must be sufficiently high to break down the initiator to produce the desired free-radicals. For example, using benzoyl peroxide as the initiator, the reaction temperature can be between about 75°C and about 90°C, preferably between about 80°C and about 85°C. Higher and lower temperatures can be employed, a suitable broad range of temperatures being between about 20°C and about 200°C, with preferred temperatures between about 50°C and about 150°C.

The reaction pressure should be sufficient to maintain the solvent in the liquid phase. Pressures can therefore vary between about atmospheric and higher but the preferred pressure is atmospheric.

The reaction time is usually sufficient to result in the substantially complete conversion of the acidic reactant, α-olefin and polyolefin to terpolymer. The reaction time is suitably between one and 24 hours with preferred reaction times between two and ten hours.

As noted above, the reaction is a solution type polymerization reaction. The polyolefin, α-olefin, acidic reactant, solvent and initiator can be brought together in any suitable manner. The important factors are intimate contact of the monomers in the presence of the free-radical producing material. The reaction, for example, can be conducted in a batch system where the polyolefin and α-olefin are added all initially to a mixture of acidic reactant, initiator and solvent or the polyolefin and α-olefin can be added intermittently or continuously to the reaction pot. Alternatively, the reactants may be combined in another order, for example, acidic reactant and initiator may be added to polyolefin and α-olefin and solvent in the reaction pot. In another manner the components in the reaction mixture can be added continuously to a stirred reactor with continuous removal of a portion of the product to a recovery train or to other reactors in series. The reaction can also suitably take place in a coil-type reactor where the components are added at one or more points along the coil.

The reaction solvent, as noted above, must be one which dissolves both the acidic reactant and the high molecular weight polyolefin. It is necessary to dissolve the acidic reactant and polyolefin so as to bring them into intimate contact in the solution polymerization reaction. It has been found that the solvent must also be one in which the resultant terpolymer is soluble.

Suitable solvents include liquid saturated or aromatic hydrocarbons having from six to twenty carbon atoms, ketones having from three to five carbon atoms, and liquid saturated aliphatic dihalogenated hydrocarbons having from one to five carbon atoms per molecule, preferably from one to three carbon atoms per molecule. By "liquid" is meant liquid under the conditions of polymerization. In the dihalogenated hydrocarbons, the halogens are preferably on adjacent carbon atoms. By "halogen" is meant F, Cl and Br. The amount of solvent must be such that it can dissolve the acidic reactant and polyolefin in addition to the resulting copolymers. The volume ratio of high molecular weight olefin to solvent is suitably between 100:1 and 1:2, and is preferably between 4:1 and 1:1.

Suitable solvents include the ketones having from three to six carbon atoms and the saturated dichlorinated hydrocarbons having from one to five, more preferably one to three, carbon atoms.

Examples of suitable solvents include, but are not limited to:
1. ketones, such as acetone, methylethyketone, diethylketone, and methylisobutylketone;
2. aromatic hydrocarbons, such as benzene, xylene and toluene;
3. saturated dihalogenated hydrocarbons, such as dichloromethane, dibromoethane, 1-bromo-2-chloroethane, 1,1-dibromoethane, 1,1-dichloroethane, 1,2-dichloroethane, 1,3-dibromopropane, 1,2-dibromopropane, 1,2-dibromo-2-methylpropane, 1,2-dichloropropane, 1,1-dichloropropane, 1,3-dichloropropane, 1-bromo-2-chloropropane, 1,2-dichlorobutane, 1,5-dibromopentane, and 1,5-dichloropentane; or
4. mixtures of the above, such as benzene methylethylketone.

The terpolymer is conveniently separated from the solvent and unreacted acidic reactant by conventional procedures such as phase separation, solvent distillation, precipitation and the like. If desired, dispersing agents and/or co-solvents may be used during the reaction.

The polyamine used in making the oil soluble dispersant of this invention is one or a mixture of polyamines which preferably has at least one primary amino group in the molecule and which additionally contains an average of at least two other amino nitrogen atoms in the molecule. The polyamine may comprise a polyalkylene polyamine containing 3 to 6 primary and secondary amino groups per molecule.

One preferred type of polyamine is comprised of alkylene polyamines such as those represented by the formula:

H₂N(CH₂)ₙ(NH(CH₂)ₙ)ₘNH₂

wherein n is 2 to about 10 (preferably 2 to 4, more preferably 2 or 3, and most preferably 2) and m is 0 to 10, (preferably 1 to about 6). Illustrative are ethylene diamine, diethylene triamine, triethylene tetramine, tetraethylene pentamine, spermine, pentaethylene hexamine, propylene diamine (1,3-propanediamine), butylene diamine (1,4-butanediamine), hexamethylene diamine (1,6-hexanediamine)and decamethylene diamine (1,10-decanediamine). Preferred for use is tetraethylene pentamine or a polyamine mixture which approximates tetraethylene pentamine (TEPA). These mixtures are commercially available (e.g., S-1107 available from Dow Chemical Company).

Cyclic polyamines such as aminoalkyl-piperazines, e.g. β-aminoethyl-piperazine, can also be used in the invention.

Another preferred type of polyamine is comprised of hydrocarbyl polyamines containing from 10 to 50 weight percent acyclic alkylene polyamines and 5o to 90 weight percent cyclic alkylene polyamines. Preferably such mixture is a mixture consisting essentially of polyethylene polyamines, especially a mixture having an overall average composition approximating that of polyethylene pentamine or a mixture having an overall average composition approximating that of polyethylene tetramine. Another useful mixture has an overall average composition approximating that of polyethylene hexamine. In this connection, the terms "polyalkylene" and "polyethylene", when utilised in conjunction with such terms as "polyamine", "tetramine". "pentamine", "hexamine", etc., denote that some of the adjacent nitrogen atoms in the product mixture are joined by a single alkylene group whereas other adjacent nitrogen atoms in the product mixture are joined by two alkylene groups thereby forming a cyclic configuration, i.e., a substituted piperazinyl structure. For example, the following mixture of compounds:
(a)

   H₂N-C₂H₄-NH-C₂H₄-NH-C₂H₄-NH₂
(b) 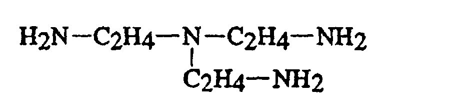
(c) 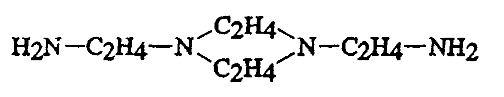
(d) 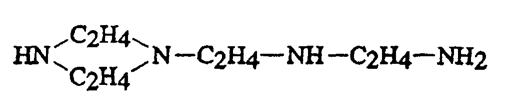
(e) 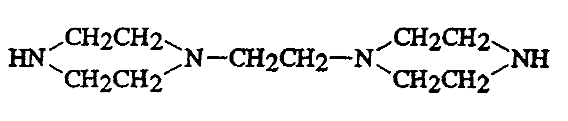
is termed herein a "polyethylene tetramine" inasmuch as its overall composition is that of a tetramine (four amino groups per molecule) in which acyclic components (a) and (b) have three ethylene groups per molecule, cyclic components (c) and (d) have four ethylene groups per molecule, and cyclic component (e) has five ethylene groups per molecule. Thus, if the above mixture contains from 10 to 50 weight percent of components (a) and (b) -- or either of them -- and from 90 to 50 weight percent of components (c), (d) or (e) -- or any two or all three of them -- it is a polyethylene tetramine suitable for use in the practise of this invention. Small amounts of lower and/or higher molecular weight species may of course be present in the mixture.

Among the especially preferred embodiments of this invention are dispersants derived by:
1) use of a mixture of polyalkylene polyamines (10-50% acyclic; 90-50% cyclic) having an overall composition approximating that of polyalkylene pentamine and further characterized by containing on a weight basis:
   a) from 2 to 10% of polyalkylene tetramines;
   b) from 60 to 85% of polyalkylene pentamines;
   c) from 10 to 20% of polyalkylene hexamines; and
   d) up to 10% lower and/or higher analogs of the foregoing.
2) use of a mixture of polyalkylene polyamines (10-50% acyclic; 90-50% cyclic) having an overall composition approximating that of polyalkylene pentamine and further characterized by containing on a weight basis:
   a) at least 30% of the cyclic isomer depicted as

      N - N = N - N - N
   b) at least 10% of the cyclic isomer depicted as

      N = N - N - N - N
   c) at least 2% of the acyclic branched isomer depicted as
      and 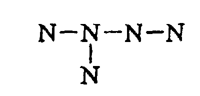
   d) at least 5% of the acyclic linear isomer depicted as

      N - N - N - N - N
3) use of a mixture of polyalkylene polyamines (10-50% acyclic; 90-50% cyclic) having an overall composition approximating that of polyalkylene tetramine and further characterised by containing on a weight basis:
   a) at least 5% linear acyclic alkylene polyamines;
   b) at least 10% branched acyclic alkylene polyamines; and
   c) at least 60% cyclic alkylene polyamines.
4) use of a mixture of polyalkylene polyamines (10-50% acyclic; 90-50% cyclic) having an overall composition approximating that of polyalkylene tetramine and further characterised by containing on a weight basis:
   a) at least 30% of the cyclic isomer depicted as

      N - N = N - N
   b) at least 20% of the cyclic isomer depicted as

      N = N - N - N
   c) at least 10% of the acyclic branched isomer depicted as 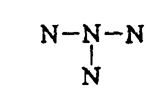 and
   d) at least 5% of the acyclic linear isomer depicted as

      N - N - N - N

In the structural representations depicted in 2) and 4) above, the "-" (whether horizontal or vertical) represents an alkylene group each of which contains up to 6 carbon atoms, preferably from 2 to 4 carbon atoms, and most preferably is the ethylene (dimethylene) group, i.e., the -CH₂CH₂- group. Similarly, the "=" represents a pair of such alkylene groups each having up to 6 carbon atoms and preferably having from 2 to 4 carbon atoms each. In the most preferred cases, the "=" represents a pair of ethylene (dimethylene) groups, each having the formula -CH₂CH₂-. As is indicated by the structural representations presented above, both of the alkylene groups in the cyclic structure depicted as "=" extend between the same pair of proximate nitrogen atoms.

In the above depictions, hydrogen atoms satisfying the trivalent character of the nitrogen atoms are not shown. Thus, when "-" is ethylene and "=" is a pair of ethylene groups, the depiction "N = N - N - N" is a simplified version of the formula:

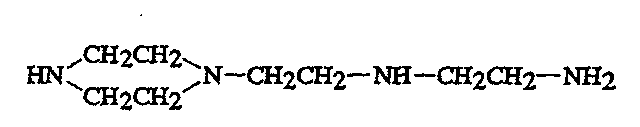

Also suitable are aliphatic polyamines containing one or more ether oxygen atoms and/or one or more hydroxyl groups in the molecule. Mixtures of various polyamines of the type referred to above are also suitable.

In principle, therefore, any polyamine having at least one primary amino group and an average of at least three amino nitrogen atoms in the molecule can be used in forming the dispersants of this invention. Product mixtures known in the trade as "triethylene tetramine", "tetraethylene pentamine", and "pentaethylene hexamine" are most preferred.

Such a polyamine may be alkoxylated e.g. by incorporation of 1 to 2 N-substituted C₂ or C₃ hydroxyalkyl groups per molecule, preferably β-hydroxyethyl groups. In this embodiment of the invention the terpolymeric acylating agent may be reacted with an alkoxylated diethylene triamine or other polyamine having an average of from 1 to 2 N-substituted C₂ or C₃ hydroxyalkyl groups per molecule, the reactants being employed in proportions of at least 2 moles (typically from 2 to 2.8 moles, and preferably from 2 to 2.5 moles) of said acylating agent per mole of said alkoxylated diethylene triamine, with the proviso that where said average of N-substituted C₂ or C₃ hydroxyalkyl groups is 1.7 or more, said proportions are such that there are more than 2 moles of said acylating agent per mole of said alkoxylated diethylene triamine. Dispersants wherein the hydroxyalkyl groups are β-hydroxyethyl groups are preferred. It is also preferable that the average number of N-substituted hydroxyalkyl groups per molecule of the dispersant fall in the range of 1.1 to 1.6. To achieve good results in the Volkswagen PV-3334 Seal Test, the average number of N-substituted hydroxyalkyl groups per molecule of the dispersant is preferably in the range of 1.1 to 1.3, and most preferably is 1.2. on the other hand, to achieve a good balance of seal performance in the Volkswagen PV-3344 Seal Test together with dispersancy, the average number of N-substituted hydroxyalkyl groups per molecule of the dispersant is preferably in the range of 1.4 to 1.6, preferably about 1.5.

The mole ratio of the polyolefin (1) to the α-olefin (2) in the terpolymers used in the dispersants of the present invention may be in the range from 99:1 to 5:95, but is usually in the range 98:2 to 10:90, and more preferably in the range 95:5 to 20:80.

The mole ratio of the total olefins used in making the terpolymers of the present invention to the maleic anhydride or other unsaturated acidic reactant is normally not more than 1:5, and is generally in the range of 1:1.3 to 1:0.5, more usually 1:1.2 to 1:0.5, and preferably in the range 1:1.1 to 1:0.8.

According to a preferred variant the process of the invention may include a post-treatment step using one or more post-treating agents. Post treatment may be carried out in known manner, for example by reaction with an inorganic or organic phosphorus compound, boron compound, or mono- or poly-carboxylic acid or derivative thereof, or with any other post-treating agents known in the art. Reference may be made, for example, to US-A-5137980 and the United States Patents referred to therein, to US-A-4857214 and US-A-5164103 and to European specification EP-A-0460309. Post-treatment leads to enhanced compatibility with fluoroelastomers, as is necessary to meet present industrial requirements. Moreover, it has been found that post-treatment of the dispersants of the invention leads to an enhancement in the viscosity index of lubricant oils containing the dispersant compared with lubricant oils containing dispersant which has not been post-treated. This also enables all or at least some viscosity index improver to be omitted from the finished lubricant.

Suitable post-treating agents include dicarboxylic acylating agents selected from (a) acyclic dicarboxylic acids having up to 12 carbon atoms in the molecule and wherein the carboxyl groups are attached to adjacent carbon atoms, (b) anhydrides of the said dicarboxylic acids, (c) acyl halides of the said dicarboxylic acids, and (d) acyclic mono- and/or dihydrocarbyl esters of the said dicarboxylic acids having no more than 7 carbon atoms per hydrocarbyl group. Examples of these acylating agents include maleic acid, maleic anhydride, α-ethylmaleic acid, malic acid, fumaric acid, itaconic acid, itaconic anhydride, citraconic acid, citraconic anhydride, succinic acid, succinic anhydride, α-methylsuccinic acid, α,α-dimethylsuccinic acid, α,β-dimethylsuccinic acid, α-ethylsuccinic acid, thiomalic acid, tartaric acid, the monoalkyl esters of the foregoing acids wherein the alkyl group has from 1 to 7 carbon atoms, the dialkyl esters of the foregoing acids wherein each alkyl group has from 1 to 7 carbon atoms, the monoalkenyl esters of the foregoing acids wherein the alkenyl group has from 2 to 7 carbon atoms, the dialkenyl esters of the foregoing acids wherein each alkenyl group has from 2 to 7 carbon atoms and the acyl chlorides of the foregoing acids. The most preferred post-treating agent for use in the practice of this invention is maleic anhydride.

Other post-treating agents which may be used are phosphorus compounds or mixtures of phosphorus compounds capable of introducing phosphorus-containing species into the dispersant undergoing such reaction. Any phosphorus compound, organic or inorganic, capable of undergoing such reaction can thus be used. Accordingly, use can be made of such inorganic phosphorus compounds as the inorganic phosphorus acids, and the inorganic phosphorus oxides, including their hydrates. Typical organic phosphorus compounds include full and partial esters of phosphorus acids, such as the mono-, di-, and tri esters of phosphoric acid, thiophosphoric acid, dithiophosphoric acid, trithiophosphoric acid and tetrathiophosphoric acid; the mono-, di-, and tri esters of phosphorous acid, dithiophosphorous acid and trithiophosphorous acid, the trihydrocarbyl phosphine oxides; the trihydrocarbyl phosphine sulphides; the mono- and dihydrocarbyl phosphonates, (RPO(OR')(OR") where R and R' are hydrocarbyl and R" is a hydrogen atom or a hydrocarbyl group), and their mono-, di- and trithio analogs; the mono- and dihydrocarbyl phosphonites, (RP(OR')(OR") where R and R' are hydrocarbyl and R" is a hydrogen atoms or a hydrocarbyl group) and their mono- and dithio analogs. Thus , use can be made of such compounds as, for example, phosphorous acid (H₃PO₃, sometimes depicted as H₂(HPO₃), are sometimes called ortho-phosphorous acid or phosphonic acid), phosphoric acid (H₃PO₄, sometimes called orthophosphoric acid), hypophosphoric acid (H₄P₂O₆), metaphosphoric acid (HPO₃), pyrophosphoric acid (H₄P₂O₇), hypophosphorous acid (H₃PO₂, sometimes called phosphinic acid), pyrophosphorous acid (H₄P₂O₅, sometimes called pyrophosphonic acid), phosphinous acid (H₃PO), tripolyphosphoric acid (H₅P₃O₁₀), tetrapolyphosphoric acid (H₆P₄O₁₃), trimetaphosphoric acid (H₃P₃O₉), phosphorus trioxide, phosphorus tetraoxide, phosphorus pentoxide, and the like. Partial or total sulphur analogs such as phosphorotetrathioic acid (H₃PS₄), phosphoromonothioic (H₃PO₃S), phosphorodithioic acid (H₃PO₂S₂), phosphorotrithioic acid (H₃POS₃), phosphorus sesquisulfide, phosphorus heptasulfide, and phosphorus pentasulfide (P₂S₅, sometimes referred to as P₄S₁₀) can also be used in the practice of this invention. Also usable, though less preferred, are the inorganic phosphorus halide compounds such as PCl₃, PBr₃, POCl₃, PSCl₃, etc. The preferred phosphorus reagent is phosphorous acid, (H₃PO₃).

Likewise use can be made of such organic phosphorus compounds as mono-, di-, and triesters of phosphoric acid (e.g., trihydrocarbyl phosphates, dihydrocarbyl monoacid phosphates, monohydrocarbyl diacid phosphates, and mixtures thereof), mono-, di-, and triesters of phosphorous acid (e.g. trihydrocarbyl phosphites, dihydrocarbyl hydrogen phosphites, hydrocarbyl diacid phosphites, and mixtures thereof), esters of phosphonic acids (both "primary", RP(O)(OR)₂, and "secondary", R₂P(O)(OR)), esters of phosphinic acids, phosphonyl halides (e.g. RP(O)Cl₂ and R₂P(O)Cl), halophosphites (e.g. (RO)PCl₂ and (RO)₂PCl), halophosphates (e.g. ROP(O)Cl₂ and (RO₂)P(O)Cl), tertiary pyrophosphate esters (e.g. (RO)₂P(O)-O-P(O)(OR)₂), and the total or partial sulphur analogs of any of the foregoing organic phosphorus compounds, and the like wherein each hydrocarbyl group contains up to about 100 carbon atoms, preferably up to about 50 carbon atoms, more preferably up to about 24 carbon atoms, and most preferably up to about 12 carbon atoms. Also usable, although less preferred, are the halophosphine halides (e.g. hydrocarbyl phosphorus tetrahalides, dihydrocarbyl phosphorus trihalides, and trihydrocarbyl phosphorus dihalides), and the halophosphines (monohalophosphines and dihalophosphines).

When using an organic phosphorus compound, it is preferable to use a water-hydrolyzable phosphorus compound, especially a water hydrolyzable dihydrocarbyl hydrogen phosphite, and water in the phosphorylation reaction so that the phosphorus compound is partially (or completely) hydrolyzed during the reaction.

It is also possible to post-treat using a boron compound or mixture of boron compounds capable of introducing boron-containing species into the dispersant undergoing the reaction. Any boron compound, organic or inorganic, capable of undergoing such reaction can be used. Accordingly use can be made of boron oxide, boron oxide hydrate, boron trifluoride, boron tribromide, boron trichloride, HBF₄, boron acids such as boronic acid (e.g. alkyl-B(OH)₂ or aryl-B(OH)₂), boric acid (i.e. H₃BO₃), tetraboric acid (i.e. H₂B₅O₇), metaboric acid (i.e. HBO₂), ammonium salts of boron acids, and esters of such boron acids. The use of complexes of a boron trihalide with ethers, organic acids, inorganic acids, or hydrocarbons is a convenient means of introducing the boron reactant into the reaction mixture. Such complexes are known and are exemplified by boron trifluoride-diethyl ether, boron trifluoride-phenyl, boron trifluoride-phosphoric acid, boron trichloride-chloroacetic acid, boron tribromide-dioxane, and boron trifluoride-methyl ethyl ether.

Specific examples of boronic acids include methyl boronic acid, phenyl-boronic acid, cyclohexyl boronic acid, p-heptylphenyl boronic acid and dodecyl boronic acid.

The boron acid esters include especially mono, di-, and tri-organic esters of boric acid with alcohols or phenols such as, e.g. methanol, ethanol, isopropanol, cyclohexanol, cyclopentanol, 1-octanol, 2-octanol, dodecanol, behenyl alcohol, oleyl alcohol, stearyl alcohol, benzyl alcohol, 2-butyl cyclohexanol, ethylene glycol, propylene glycol, trimethylene glycol, 1,3-butanediol, 2,4-hexanediol, 1,2-cyclohexanediol, 1,3-octanediol, glycerol, pentaerythritol, diethylene glycol, carbitol, Cellosolve, triethylene glycol, tripropylene glycol, phenol, naphthol, p-butylphenol, o,p-diheptylphenol, n-cyclohexylphenol, 2,2-bis-(p-hydroxyphenyl) propane, polyisobutene (molecular weight of 1500)-substituted phenol, ethylene chlorohydrin, o-chlorophenol, m-nitrophenol, 6-bromo-octanol, and 7-keto-decanol. Lower alcohols, 1,2-glycols, and 1,3-glycols, i.e. those having less than about 8 carbon atoms are especially useful for preparing the boric acid esters for the purpose of this invention.

Any combination of the aforesaid post-treatments can be carried by the simultaneous or consecutive reaction with the chosen post-treatment agents. Preferably the post-treatment agent is an inorganic phosphorus acid or anhydride, boric acid, an unsaturated dicarboxylic acid or derivative thereof, or a mixture of these.

The invention also includes within its scope compositions, especially lubricant compositions, comprising a mixture of an oil of lubricating viscosity and a dispersant as described above. Such compositions may comprise from 1 to 99% by weight of the oil of lubricating viscosity and from 99 to 1% by weight of the dispersant of the invention.

A further embodiment of the invention is the use of above described dispersants to lubricate an engine, e.g. an internal combustion engine, or other device, particularly wherein said lubricant composition comes into contact with a fluoroelastomer. As noted above, the dispersants of the invention show a remarkably reduced tendency to degrade or otherwise adversely effect fluoroelastomers.

The dispersants of the invention may conveniently be provided in the form of an additive concentrate. Such concentates typically comprise from 1 to 99% by weight dispersant and from 99 to 1% by weight of solvent or diluent for the dispersant, the solvent or diluent being miscible and/or capable of dissolving in the lubricating oil in which the concentrate is to be used. The lubricating oil to which the concentrate is to be added may be used as the solvent or diluent.

The invention is further illustrated in the following Examples.

### EXAMPLE 1

A terpolymer (Mn 1733, 100.6g) made from PIB (Mn 1300), a C₂₀₋₂₄ α-olefin (Chevron) and maleic anhydride having an acid value of 0.78 mequiv/g was charged to a flask along with process oil (40.3g) and heated to 90°C. A polyamine mix equivalent to TEPA (13.25g) was added over 10 minutes while the temperature was kept below 95°C. After stirring for 30 minutes, more terpolymer (61.9g) was added, and the temperature was increased to 167°C. After stirring for 3 hours, the mixture was stripped under vacuum and then diluted with oil to give a product with a nitrogen content of 1.78%.

### COMPARATIVE EXAMPLE 1

A terpolymer (Mn 1811, 82.9g) made from PIB (Mn 950), a C₂₀₋₂₄ α-olefin and maleic anhydride having an acid value of 0.85 mequiv/g was mixed with 100 SN mineral oil (29.67g) and heated to 90°C. A polyamine mix equivalent to TEPA (7.4g) was added over 25 minutes. The temperature was raised to 167°C and a second charge of oil (29.67g) was added. The mixture was stirred for 3 hours and then stripped under vacuum for 45 minutes. The product had a nitrogen content of 1.7%.

### EXAMPLE 2

The procedure of Comparative Example 1 was repeated except that the initial charges were terpolymer (71.2g), mineral oil (41.44g) and polyamine (10.33g). After addition of the amine the temperature was raised to 105°C and further charge of terpolymer (44.6g) and mineral oil (41.4g) were added. The procedure of the Comparative Example was then followed to give a product with a nitrogen content of 1.7%.

### EXAMPLE 3

The procedure of Example 2 was followed except that the initial charges were terpolymer (77.8g), mineral oil (35.8g) and polyamine (8.9g) and the second charge was mineral oil (35.8g) and terpolymer (22.2g) to give a product with a nitrogen content of 1.7%..

### EXAMPLE 4

A terpolymer (Mn 1534, 100g) made from PIB (Mn 1300) C₂₀₋ ₂₄ α-olefin (Chevron) and maleic anhydride having an acid number of 0.75 mequiv/g and process oil (54.2g) were heated to 90°C. Aminoethylpiperazine (14.6g) was added. After stirring for 30 minutes, the temperature was raised to 105°C and a further charge of terpolymer (50g) was added. The mixture was heated to 167°C and stirred for 3 hours. After stripping for 1 hour under vacuum the mixture was filtered to give a product containing 2.0% N.

### EXAMPLE 5

The procedure of Example 2 was followed except that the initial charges were terpolymer (60.7g), mineral oil (51.7g) and polyamine (12.19g) and the second charge was mineral oil (46.04g) and terpolymer (76.0g) to give a product with a nitrogen content of 1.71%.

### EXAMPLE 6

The product formed in Example 1 after vacuum stripping was charged to a flask with process oil (33.2g), and the temperature adjusted to 150°C. Boric acid (9.50g) was added followed by maleic anhydride (1.42g) and the mixture stirred for one hour. The mixture was stripped for one hour and then diluted with oil (159.6g). After filtration the product had a nitrogen content of 1.67% and a boron content of 0.85%.

### EXAMPLE 7

A terpolymer (Mn 2061, 123.0g) made from PIB (Mn 1300), a C₂₀₋₂₄ α-olefin (Chevron) and maleic anhydride having an acid number of 0.77mequiv/g was charged to a flask along with process oil (83.9g) and heated to 90°C. A polyamine equivalent to TEPA (16.27g) was added over 15 minutes and the reaction mixture stirred for 35 minutes. The temperature was raised to 105°C and a further charge of terpolymer added (77.0g). The temperature was raised to 167°C and stirred for three hours and then stripped for 45 minutes. After releasing the vacuum the temperature was adjusted to 150°C and boric acid (15.7g) and maleic anhydride (2.36g) added. The mixture was stripped for one hour and the filtered to give a product with a nitrogen content of 1.61% and a boron content of 0.78%.

### EXAMPLE 8

A terpolymer (Mn 2061, 430g) made from PIB (Mn 1300), a C₂₀₋₂₄ α-olefin (Chevron) and maleic anhydride, having an acid number of 0.77mequiv/g was charged to a flask along with process oil (291.8g) and heated to 90°C. A polyamine mix equivalent to TEPA (56.4g) was added over 40 minutes and then the mixture heated to 105°C. A further charge of copolymer (270.2g) was made and at the end of the addition the temperature was raised to 167°C. After stirring for three hours the mixture was stripped for 45 minutes. The temperature was reduced to 150°C and boric acid (54.52g) followed by maleic anhydride (8.23g) added. After stirring for one hour the mixture was stripped for one hour and then filtered to give a product with a nitrogen content of 1.72%.

The products of the Comparative Example and Examples 2, 3, 5 and 8 were blended into a standard 15W-40 engine oil formulation from which the conventional ashless dispersant had been omitted. The dispersant was used at a concentration in the finished lubricant of 7 wt% (including the diluent oil associated with the dispersant). The finished lubricant was thus made up by weight of 72.4% 150 SN mineral oil, 5.0% 500 SN mineral oil, 9.7% OCP viscosity index improver, 1.31% zinc dialkyl dithiophosphate, 2.6% overbased calcium sulfonate, 0.64% low base calcium sulfonate, 0.8% phenolic antioxidant, 0.25% aromatic amine antioxidant, 0.004% antifoam agent, 0.296% process oil, and the 7% of dispersant under test, the proportions of the additive components being on an as received basis. The viscometrics of the blend were measured. For comparison dispersant products based on a conventional polyisobutenyl succinic anhydride (PIBSA) were made. In each a molar ratio of PIBSA: polyamine of 1.8:1 was used. One of these was unpost-treated and had a N content of 1.8%. The other was post-treated using boric acid and maleic anhydride, the N content being 1.7%. These conventional dispersants were used at 7 wt% including diluent oil. The physical state and solubility of each of the dispersants tested was assessed. Solubility was assessed visually using the blend used in the viscometric tests. The following results were obtained.

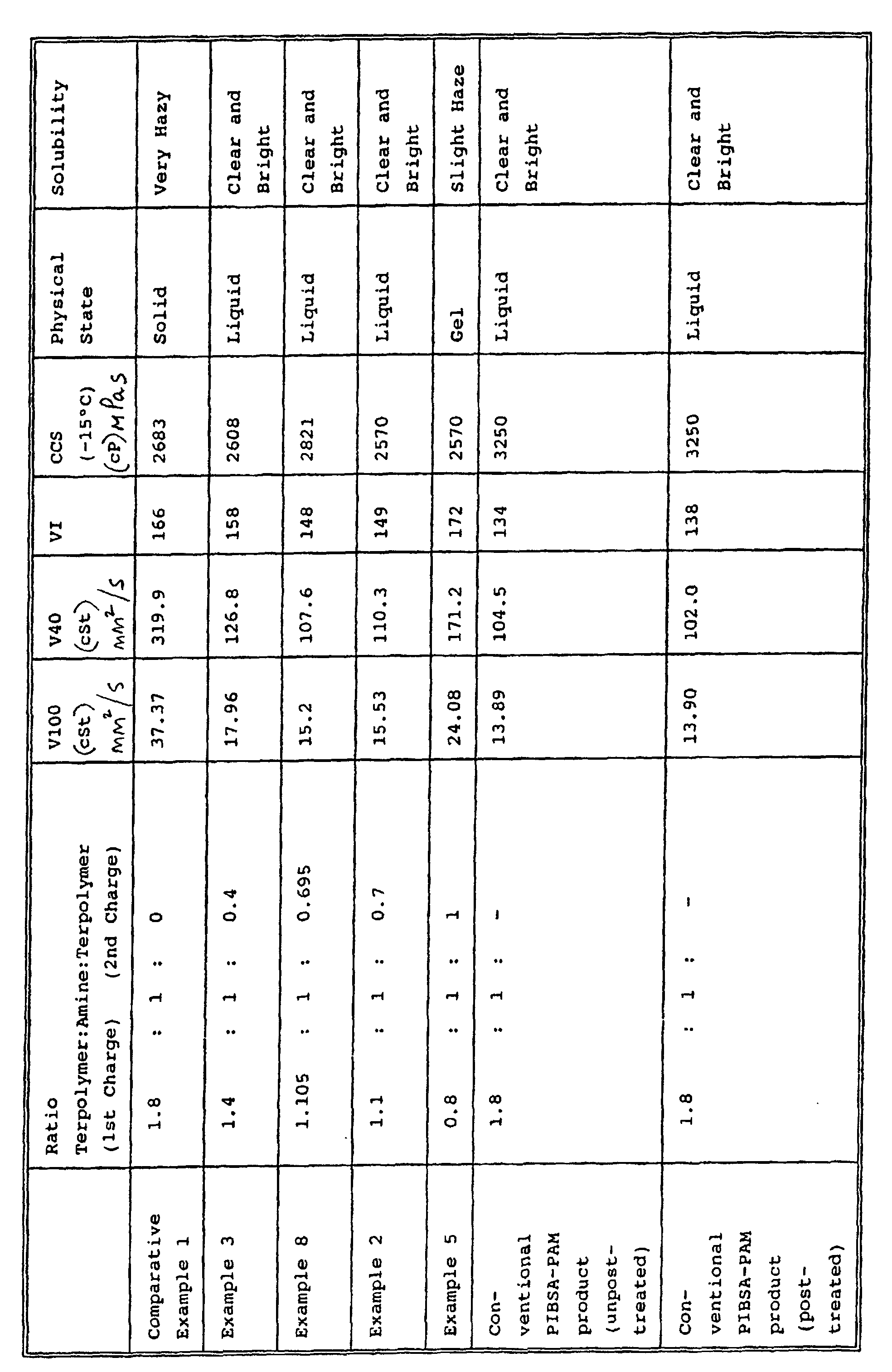

These results show that the lubricant blend incorporating the dispersants formulated in accordance with the present invention exhibit improved viscosity index when compared with the blend incorporating the conventional PIBSA-PAM products. The dispersants in accordance with the invention provide much higher V100 and VI without adversely affecting the cold cranking simulator (CCS) which is indeed lower. This would enable all or at least most of the VI improver to be left out of the finished lubricant.

The dispersant of Comparative Example 1 exhibits extremely high viscosity lift, as is clear from the V100 and V40 values observed. However this dispersant is a solid which is not very soluble in the diluent oil. The physical state of the dispersant is believed to be dependent upon the viscosity lift it confers. Dispersants such as that of the comparative Example are not suitable to be used as dispersants for lubricating oils. The results for Examples 2, 3, 5 and 8 on the other hand, show that by splitting the addition of the terpolymer viscosity lift can be controlled to give dispersants which are mobile liquids or gels which are more readily soluble in oil. Such dispersants are much more well suited for use in lubricating oils than the kind of dispersant described in the Comparative Example. The dispersant of Example 5 in fact gives an increase in viscosity index when compared with Comparative Example 1, without the associated disadvantages described above.

Furthermore, the viscosity lift exhibited by Comparative Example 1 is far too great to be of use in formulating oils of standard viscosity grades as the viscosity lift exhibited would mean that even with all the viscosity improver removed the viscosity at 100°C would be above the level set for the viscosity grade. With dispersants in accordance with the present invention the degree of viscosity lift can be tailored to suit the final oil blend.

It will be noted that the dispersants of the invention provide a significant reduction in low temperature viscosity (V40) when compared with the dispersant of the Comparative Example, without reducing the viscosity index to a significant extent. Thus, using the dispersants of the invention it is possible to control the viscometric properties of lubricating oils in which they are incorporated possibly without the need for some or any viscosity index improver.

## Claims

1. A process for preparing an oil-soluble dispersant which comprises reacting a polyamine with an initial charge of a terpolymeric acylating agent derived from (1) a polyolefin containing on average at least 30 carbon atoms per molecule in which at least 30% of the residual olefin groups are in the form of vinylidene radicals of formula:
-CR=CH₂
where R is alkyl of 1 to 6 carbon atoms; (2) an α-olefin; and (3) an unsaturated dicarboxylic acid or derivative thereof, at least one further charge of the terpolymeric acylating agent being added subsequently.

2. A process according to claim 1, wherein the polyolefin (1) contains on average at least 50 carbon atoms.

3. A process according to claim 1 or 2, wherein in the reaction the mole ratio of total polyamine to total terpolymeric acylating agent is from 2:1 to 1:3.

4. A process according to claim 3, wherein the mole ratio of total polyamine to total terpolymeric acylating agent is from 1:1 to 1:2.5.

5. A process according to any one of claims 1 to 4, wherein the mole ratio of terpolymeric acylating agent reacted initially with polyamine to terpolymeric acylating agent added subsequently is from 20:1 to 1:3.

6. A process according to claim 5, wherein the mole ratio is from 4:1 to 1.5:1.

7. A process according to any one of claims 1 to 6, wherein (3) is an unsaturated dicarboxylic acid or derivative thereof capable of reacting with a polyamine.

8. A process according to claim 7, wherein the derivative is an ester, amide, acyl halide, metal or ammonium salt, or anhydride.

9. A process according to any one of claims 1 to 8, wherein the unsaturated dicarboxylic acid or derivative thereof (3) has the formula:
X-CO-CH=CH-CO-X'
in which X and X' are each -OH, -O-hydrocarbyl, -O-M (where M is a metal or ammonium), -NH₂, -Cl, or -Br, or X and X' together are -O-.

10. A process according to claim 9, wherein the unsaturated dicarboxylic acid or derivative thereof (3) is maleic acid or fumaric acid or maleic anhydride.

11. A process according to any one of claims 1 to 10, wherein the polyolefin (1) of the terpolymeric acylating agent is a polyisobutene.

12. A process according to any one of claims 1 to 11, wherein the polyolefin (1) of the terpolymeric acylating agent is a polyisobutene having a number average molecular weight in the range 800 to 5000 and in which at least 50% of the residual olefin groups are in the form of vinylidene radicals of formula:
-C(R)=CH₂
where R is as defined in claim 1.

13. A process according to any one of claims 1 to 12, wherein the α-olefin (2) contains from 2 to 40 carbon atoms.

14. A process according to any one of claims 1 to 13, wherein the α-olefin (2) is of formula:
R'CH=CH₂
in which R' is an aliphatic group of 1 to 26 carbon atoms.

15. A process according to any one of the preceding claims, wherein the polyamine comprises a polyalkylene polyamine containing 3 to 6 primary and secondary amino groups per molecule.

16. A process according to any one of the preceding claims, wherein the polyamine comprises an alkylene polyamine of the formula:
H₂N(CH₂)ₙ(NH(CH₂)ₙ)ₘNH₂
wherein n is from 2 to 10 and m is from 0 to 10.

17. A process according to any one of claims 1 to 14, wherein the polyamine comprises (a) a mixture of polyamines having an average composition which approximates polyethylene tetramine, (b) tetraethylene pentamine, or a mixture of polyamines having an average composition which approximates tetraethylene pentamine, or (c) a mixture of polymers having an average composition which approximates polyethylene hexamine.

18. A process according to any one of claims 1 to 15 and 17, wherein the polyamine is a mixture of hydrocarbyl polyamines containing 10 to 50 weight percent acyclic alkylene polyamines and 90 to 50 weight percent cyclic alkylene polyamines, an aliphatic polyamine containing one or more ether oxygen atoms and/or one or more hydroxyl groups in the molecule, or a mixture thereof.

19. A process according to claim 17 or 18, wherein the polyamine is a mixture of compounds:
(a)
H₂N-C₂H₄-NH-C₂H₄-NH-C₂H₄-NH₂
(b) 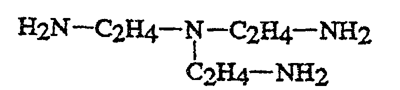
(c) 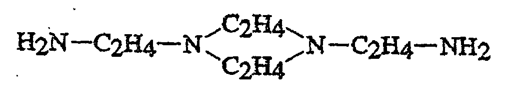
(d) 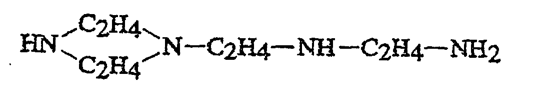
(e)

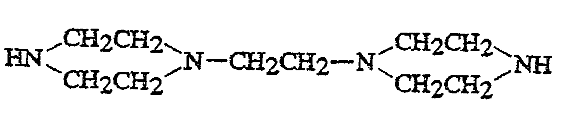

20. A process according to any one of the preceding claims, wherein the mole ratio of polyolefin (1) to α-olefin (2) is from 99:1 to 5:95.

21. A process according to any one of the preceding claims, wherein the mole ratio of total olefins (1) and (2) to acid or acid derivative (3) used in making the terpolymer is from 1:1.3 to 1:0.5.

22. A process according to any one of the preceding claims, further comprising post-treatment with one or more post-treating agents.

23. A process according to claim 22, wherein the post-treating agent is an inorganic or organic phosphorus compound, boron compound, or mono- or poly-carboxylic acid or derivative thereof.

24. A process according to claim 23, wherein the post-treating agent is an inorganic phosphorus acid or anhydride, boric acid, an unsaturated dicarboxylic acid or derivative thereof, or a mixture of these.

25. An oil-soluble dispersant obtainable by the process claimed in any one of the preceding claims.

26. An additive concentrate for use in a lubricating oil comprising from 1 to 99% by weight of a dispersant as claimed in claim 25 and from 99 to 1% by weight of solvent or diluent for the dispersant, the solvent or diluent being miscible and/or capable of dissolving in the lubricating oil in which the concentrate is to be used.

27. A lubricant composition comprising a dispersant as claimed in claim 25 and an oil of lubricating viscosity.

28. The use of a lubricant composition as claimed in claim 27 to lubricate an engine or other device.

29. The use according to claim 28 wherein the lubricant composition comes in contact with a fluoroelastomer.

30. The use of a dispersant as claimed in claim 25 as an additive for controlling the viscometric properties of a lubricant composition comprising a major proportion of oil of lubricating viscosity.

31. The use of a dispersant prepared by the process claimed in any one of claims 22 to 24 in the formulation of a lubricating composition having fluoroelastomer seal compatibility, the lubricating composition comprising a major proportion of an oil of lubricating viscosity.

## Patentansprüche

1. Verfahren für die Herstellung eines öllöslichen Dispergiermittels, das das Umsetzen eines Polyamins mit einer anfänglichen Beschickung eines terpolymeren Acylierungsmittels umfasst, abgeleitet von (1) einem Polyolefin, enthaltend im Mittel mindestens 30 Kohlenstoffatome pro Molekül, worin mindestens 30 % der verbleibenden Olefingruppen in Form von Vinylidenresten der Formel
-CR=CH₂
vorliegen, worin R ein Alkyl von 1 bis 6 Kohlenstoffatomen ist; (2) einem α-Olefin; und (3) einer ungesättigten Dicarbonsäure oder einem Derivat derselben, worin mindestens eine weitere Beschickung des terpolymeren Acylierungsmittels im Folgenden zugesetzt wird.

2. Verfahren gemäß Anspruch 1, worin das Polyolefin (1) im Mittel mindestens 50 Kohlenstoffatome enthält.

3. Verfahren gemäß Anspruch 1 oder 2, worin in der Reaktion das Molverhältnis von Gesamtpolyamin zu Gesamtmenge an terpolymerem Acylierungsmittel von 2:1 bis 1:3 beträgt.

4. Verfahren gemäß Anspruch 3, worin das Molverhältnis von Gesamtpolyamin zu Gesamtmenge an terpolymerem Acylierungsmittel von 1:1 bis 1:2,5 beträgt.

5. Verfahren gemäß einem der Ansprüche 1 bis 4, worin das Molverhältnis von terpolymerem Acylierungsmittel, das anfänglich mit Polyamin umgesetzt wird, zu terpolymerem Acylierungsmittel, das im Folgenden zugesetzt wird, von 20:1 bis 1:3 beträgt.

6. Verfahren gemäß Anspruch 5, worin das Molverhältnis von 4:1 bis 1,5:1 beträgt.

7. Verfahren gemäß einem der Ansprüche 1 bis 6, worin (3) eine ungesättigte Dicarbonsäure oder ein Derivat derselben ist, befähigt zur Reaktion mit einem Polyamin.

8. Verfahren gemäß Anspruch 7, worin das Derivat ein Ester, ein Amid, ein Säurehalogenid, ein Metall- oder Ammoniumsalz oder ein Anhydrid ist.

9. Verfahren gemäß einem der Ansprüche 1 bis 8, worin die ungesättigte Dicarbonsäure oder das Derivat derselben (3) die Formel aufweist:
X-CO-CH=CH-CO-X',
worin X und X' jeweils -OH, -O-Hydrocarbyl, -O-M (worin M ein Metall oder Ammonium ist), -NH₂, -Cl oder -Br sind oder X und X' zusammen -O- darstellen.

10. Verfahren gemäß Anspruch 9, worin die ungesättigte Dicarbonsäure oder das Derivat derselben (3) Maleinsäure, Fumarsäure oder Maleinsäureanhydrid ist.

11. Verfahren gemäß einem der Ansprüche 1 bis 10, worin das Polyolefin (1) des terpolymeren Acylierungsmittels ein Polyisobuten ist.

12. Verfahren gemäß einem der Ansprüche 1 bis 11, worin das Polyolefin (1) des terpolymeren Acylierungsmittels ein Polyisobuten mit einem Molekulargewichtszahlenmittel im Bereich von 800 bis 5000 ist, in dem mindestens 50 % der verbleibenden Olefingruppen in Form von Vinylidenresten der Formel
-C(R)=CH₂
vorliegen, worin R wie in Anspruch 1 definiert ist.

13. Verfahren gemäß einem der Ansprüche 1 bis 12, worin das α-Olefin (2) 2 bis 40 Kohlenstoffatome enthält.

14. Verfahren gemäß einem der Ansprüche 1 bis 13, worin das α-Olefin (2) der Formel
R'CH=CH₂
entspricht, worin R' eine aliphatische Gruppe mit 1 bis 26 Kohlenstoffatomen ist.

15. Verfahren gemäß einem der vorstehenden Ansprüche, worin das Polyamin ein Polyalkylenpolyamin umfasst, enthaltend 3 bis 6 primäre und sekundäre Aminogruppen pro Molekül.

16. Verfahren gemäß einem der vorstehenden Ansprüche, worin das Polyamin ein Alkylenpolyamin der Formel
H₂N(CH₂)ₙ(NH(CH₂)ₙ)ₘNH₂
umfasst, worin n von 2 bis 10 und m von 0 bis 10 ist.

17. Verfahren gemäß einem der Ansprüche 1 bis 14, worin das Polyamin umfasst (a) eine Mischung von Polyaminen mit einer mittleren Zusammensetzung, die ungefähr Polyethylentetramin entspricht, (b) Tetraethylenpentamin oder eine Mischung von Polyaminen mit einer mittleren Zusammensetzung, die in etwa Tetraethylenpentamin entspricht, oder (c) eine Mischung von Polymeren mit einer mittleren Zusammensetzung, die in etwa Polyethylenhexamin entspricht.

18. Verfahren gemäß einem der Ansprüche 1 bis 15 und 17, worin das Polyamin eine Mischung von Hydrocarbylpolyaminen darstellt, enthaltend 10 bis 50 Gew.-% acyclischer Alkylenpolyamine und 90 bis 50 Gew.-% cyclische Alkylenpolyamine, ein aliphatisches Polyamin, enthaltend ein oder mehr Ethersauerstoffatome und/oder ein oder mehrere Hydroxylgruppen im Molekül, oder eine Mischung derselben.

19. Verfahren gemäß Anspruch 17 oder 18, worin das Polyamin eine Mischung der Verbindungen ist:
(a)
H₂N-C₂H₄-NH-C₂H₄-NH-C₂H₄-NH₂
(b) 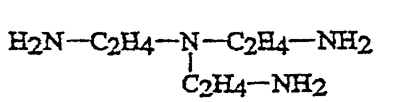
(c) 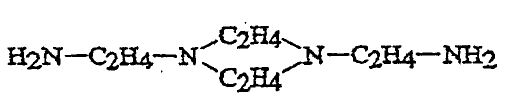
(d) 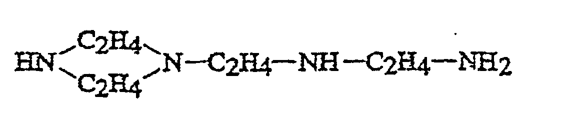
(e)

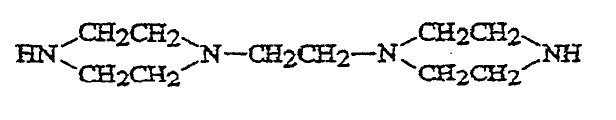

20. Verfahren gemäß einem der vorstehenden Ansprüche, worin das Molverhältnis von Polyolefin (1) zu α-Olefin (2) von 99:1 bis 5:95 beträgt.

21. Verfahren gemäß einem der vorstehenden Ansprüche, worin das Molverhältnis von Gesamtolefinen (1) und (2) zu Säure oder Säurederivat (3), verwendet bei der Herstellung des Terpolymeren, von 1:1,3 bis 1:0,5 beträgt.

22. Verfahren gemäß einem der vorstehenden Ansprüche, zusätzlich umfassend eine Nachbehandlung mit einem oder mehreren Nachbehandlungsmitteln.

23. Verfahren gemäß Anspruch 22, worin das Nachbehandlungsmittel eine anorganische oder organische Phosphorverbindung, Borverbindung oder Mono- oder Polycarbonsäure oder ein Derivat derselben ist.

24. Verfahren gemäß Anspruch 23, worin das Nachbehandlungsmittel eine anorganische Phosphorsäure oder Anhydrid, Borsäure, eine ungesättigte Dicarbonsäure oder ein Derivat derselben oder eine Mischung davon darstellt.

25. Öllösliches Dispergiermittel, erhältlich über das Verfahren, beansprucht in einem der vorstehenden Ansprüche.

26. Additivkonzentrat für die Verwendung in einem Schmieröl, umfassend von 1 bis 99 Gew.-% eines Dispergiermittels, wie in Anspruch 25 beansprucht, und von 99 bis 1 Gew.-% an Lösungsmittel oder Verdünner für das Dispergiermittel, wobei das Lösungsmittel oder der Verdünner mit dem Schmieröl, in dem das Konzentrat verwendet werden soll, mischbar ist und/oder sich in diesem lösen kann.

27. Schmierölzusammensetzung, umfassend ein Dispergiermittel gemäß Anspruch 25 und ein Öl mit Schmierviskosität.

28. Verwendung einer Schmierölzusammensetzung gemäß Anspruch 27 zum Schmieren eines Motors oder einer anderen Vorrichtung.

29. Verwendung gemäß Anspruch 28, worin die Schmierzusammensetzung mit einem Fluorelastomer in Kontakt kommt.

30. Verwendung eines Dispergiermittels gemäß Anspruch 25 als ein Additiv für das Steuern der viskosimetrischen Eigenschaften einer Schmierzusammensetzung, umfassend eine Hauptmenge eines Öls mit Schmierviskosität.

31. Verwendung eines Dispergiermittels, hergestellt über das Verfahren, wie in einem der Ansprüche 22 bis 24 beansprucht, bei der Formulierung einer Schmierzusammensetzung, die mit Dichtungen aus Fluorelastomer kompatibel ist, wobei die Schmierzusammensetzung eine Hauptmenge eines Öls mit Schmierviskosität umfasst.

## Revendications

1. Procédé pour la préparation d'un dispersant soluble dans l'huile, qui comprend la réaction d'une polyamine avec une charge initiale d'un agent terpolymère d'acylation dérivé (1) d'une polyoléfine contenant en moyenne au moins 30 atomes de carbone par molécule, dans laquelle au moins 30 % des groupes oléfiniques résiduels sont sous forme de radicaux vinylidène de formule :
-CR=CH₂
dans laquelle R représente un groupe alkyle ayant 1 à 6 atomes de carbone ; (2) d'une α-oléfine ; et (3) d'un acide dicarboxylique insaturé ou d'un de ses dérivés, au moins une autre charge de l'agent terpolymère d'acylation étant ajoutée ultérieurement.

2. Procédé suivant la revendication 1, dans lequel la polyoléfine (1) contient en moyenne au moins 50 atomes de carbone.

3. Procédé suivant la revendication 1 ou 2, dans lequel, dans la réaction, le rapport molaire de la polyamine totale à l'agent terpolymère d'acylation total est compris dans l'intervalle de 2:1 à 1:3.

4. Procédé suivant la revendication 3, dans lequel le rapport molaire de la polyamine totale à l'agent terpolymère d'acylation total est compris dans l'intervalle de 1:1 à 1:2,5.

5. Procédé suivant l'une quelconque des revendications 1 à 4, dans lequel le rapport molaire de l'agent terpolymère d'acylation amené à réagir initialement avec la polyamine à l'agent terpolymère d'acylation ajouté ultérieurement est compris dans l'intervalle de 20:1 à 1:3.

6. Procédé suivant la revendication 5, dans lequel le rapport molaire est compris dans l'intervalle de 4:1 à 1,5:1.

7. Procédé suivant l'une quelconque des revendications 1 à 6, dans lequel le constituant (3) est un acide dicarboxylique insaturé ou un de ses dérivés capables de réagir avec une polyamine.

8. Procédé suivant la revendication 7, dans lequel le dérivé est un ester, amide, halogénure d'acyle, sel métallique ou d'ammonium, ou anhydride.

9. Procédé suivant l'une quelconque des revendications 1 à 8, dans lequel l'acide dicarboxylique insaturé ou son dérivé (3) répond à la formule :
X-CO-CH=CH-CO-X'
dans laquelle X et X' représentent chacun un groupe -OH, -O-hydrocarbyle, -O-M (dans lequel M représente un métal ou l'ion ammonium), -NH₂, -Cl ou -Br, ou bien X et X', conjointement, représentent -O-.

10. Procédé suivant la revendication 9, dans lequel l'acide dicarboxylique insaturé ou son dérivé (3) est l'acide maléique ou l'acide fumarique ou bien l'anhydride maléique.

11. Procédé suivant l'une quelconque des revendications 1 à 10, dans lequel la polyoléfine (1) de l'agent terpolymère d'acylation est un polyisobutène.

12. Procédé suivant l'une quelconque des revendications 1 à 11, dans lequel la polyoléfine (1) de l'agent terpolymère d'acylation est un polyisobutène ayant une moyenne en nombre du poids moléculaire comprise dans l'intervalle de 800 à 5000 et dans lequel au moins 50 % des groupes oléfiniques résiduels sont sous forme de radicaux vinylidène de formule :
-C(R)=CH₂
dans laquelle R répond à la définition suivant la revendication 1.

13. Procédé suivant l'une quelconque des revendications 1 à 12, dans lequel l'α-oléfine (2) contient 2 à 40 atomes de carbone.

14. Procédé suivant l'une quelconque des revendications 1 à 13, dans lequel l'α-oléfine (2) répond à la formule :
R'CH=CH₂
dans laquelle R' représente un groupe aliphatique ayant 1 à 26 atomes de carbone.

15. Procédé suivant l'une quelconque des revendications précédentes, dans lequel la polyamine comprend une polyalkylènepolyamine contenant 3 à 6 groupes amino primaires et secondaires par molécule.

16. Procédé suivant l'une quelconque des revendications précédentes, dans lequel la polyamine comprend une alkylènepolyamine de formule :
H₂N(CH₂)ₙ(NH(CH₂)ₙ)ₘNH₂
dans laquelle n a une valeur de 2 à 10 et m a une valeur de 0 à 10.

17. Procédé suivant l'une quelconque des revendications 1 à 14, dans lequel la polyamine comprend (a) un mélange de polyamines ayant une composition moyenne proche de celle de la polyéthylènetétramine, (b) de la tétraéthylènepentamine, ou un mélange de polyamines ayant une composition moyenne qui est proche de celle de la tétraéthylènepentamine, ou (c) un mélange de polymères ayant une composition moyenne qui est proche de celle de la polyéthylènehexamine.

18. Procédé suivant l'une quelconque des revendications 1 à 15 et 17, dans lequel la polyamine est un mélange d'hydrocarbylpolyamines contenant 10 à 50 % en poids d'alkylènepolyamines acycliques et 90 à 50 % en poids d'alkylènepolyamines cycliques, une polyamine aliphatique contenant un ou plusieurs atomes d'oxygène d'éther et/ou un ou plusieurs groupes hydroxyle dans la molécule, ou un de leurs mélanges.

19. Procédé suivant la revendication 17 ou 18, dans lequel la polyamine est un mélange des composés :
(a)
H₂N-C₂H₄-NH-C₂H₄-NH-C₂H₄-NH₂
(b) 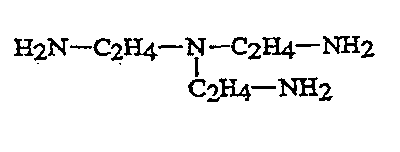
(c) 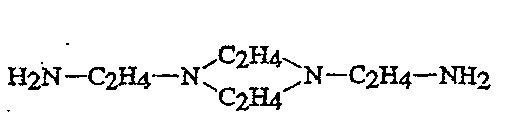
(d) 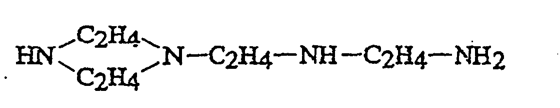
(e)

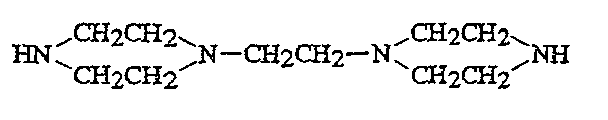

20. Procédé suivant l'une quelconque des revendications précédentes, dans lequel le rapport molaire de la polyoléfine (1) à l'α-oléfine (2) est compris dans l'intervalle de 99:1 à 5:95.

21. Procédé suivant l'une quelconque des revendications précédentes, dans lequel le rapport molaire des oléfines totales (1) et (2) à l'acide ou au dérivé d'acide (3) utilisé dans la préparation du terpolymère est compris dans l'intervalle de 1:1,3 à 1:0,5.

22. Procédé suivant l'une quelconque des revendications précédentes, comprenant en outre un post-traitement avec un ou plusieurs agents de post-traitement.

23. Procédé suivant la revendication 22, dans lequel l'agent de post-traitement est un composé inorganique ou organique de phosphore, un composé de bore ou un acide mono- ou polycarboxylique ou un de ses dérivés.

24. Procédé suivant la revendication 23, dans lequel l'agent de post-traitement est un acide ou un anhydride de phosphore inorganique, l'acide borique, un acide dicarboxylique insaturé ou un de ses dérivés, ou bien un mélange de ces composés.

25. Dispersant soluble dans l'huile pouvant être obtenu par le procédé suivant l'une quelconque des revendications précédentes.

26. Concentré d'additifs destiné à être utilisé dans une huile lubrifiante, comprenant 1 à 99 % en poids d'un dispersant suivant la revendication 25 et 99 à 1 % en poids d'un solvant ou diluant pour le dispersant, le solvant ou diluant étant miscible à et/ou capable de se dissoudre dans l'huile lubrifiante dans laquelle le concentré doit être utilisé.

27. Composition de lubrifiant comprenant un dispersant suivant la revendication 25 et une huile de viscosité propre à la lubrification.

28. Utilisation d'une composition de lubrifiant suivant la revendication 27, pour lubrifier un moteur ou un autre dispositif.

29. Utilisation suivant la revendication 28, dans laquelle la composition de lubrifiant vient en contact avec un élastomère fluoré.

30. Utilisation d'un dispersant suivant la revendication 25 comme additif pour ajuster les propriétés viscosimétriques d'une composition de lubrifiant comprenant une proportion dominante d'une huile de viscosité propre à la lubrification.

31. Utilisation d'un dispersant préparé par le procédé suivant l'une quelconque des revendications 22 à 24 dans la formulation d'une composition lubrifiante présentant une compatibilité avec les joints d'étanchéité en élastomères fluorés, la composition lubrifiante comprenant une proportion dominante d'une huile de viscosité propre à la lubrification.
